# EUROPEAN PATENT APPLICATION

(11) **EP 1 115 184 A2**
(43) Date of publication of application: **11.07.2001**
(21) Application number: 00811210.4
(22) Date of filing: 20.12.2000
(51) Int. Cl.: H01S 3/067, H01S 3/30, H01S 3/23

(54) **Multi-stage optical amplifier**

(30) Priority: 06.01.2000 US 478519
(71) Applicant: JDS Uniphase Inc., Nepean, Ontario K2G 5W8 (CA)
(72) Inventor: Nyman, Bruce, Freehold, New Jersey 07728 (US)
(74) Representative: Frei, Alexandra Sarah

(57) **Abstract**

A three-stage optical amplifier is disclosed having a first pre-amplifying stage for receiving an optical signal to be amplified and having a length of erbium doped fibre and a pump for providing energy to the erbium doped fibre. A second-stage is optically coupled to receive the optical signal from the first-stage after the optical signal has been pre-amplified. The second-stage a Raman amplifier has a length of standard or DCF optical fibre and a Raman pump for providing energy to the length of optical fibre for further amplifying the pre-amplified signal propagating therethrough and for controlling tilt of the amplified signal. A third stage EDFA for further amplifying the signal amplified by the Raman amplifier. Conveniently, the Raman stage is useful for both amplifying and providing tilt control.

## Description

This invention relates to a multi-stage optical amplifier and more particularly with a rare earth doped optical fiber amplifier having a Raman gain section.

### Background of the Invention

Optical amplifiers and particularly erbium doped optical fiber amplifiers are nearly ubiquitous in optical transmission systems, particularly in the field of telecommunications. Erbium doped fiber amplifiers (EDFAs) have high polarization insensitive gain, low cross talk between signals of different wavelengths, good saturation output power, and a noise figure close to the fundamental quantum limit. The excellent noise characteristics allow hundreds of these amplifiers to be cascaded to cover spans of thousands of kilometers of optical fibre. EDFAs as opposed to electronic repeaters are also transparent to data rate, signal format, and wavelength over a limited range, making them useful for wavelength multiplexed (WDM) communication systems that simultaneously transmit a large number of signals using different wavelength bands for each signal.

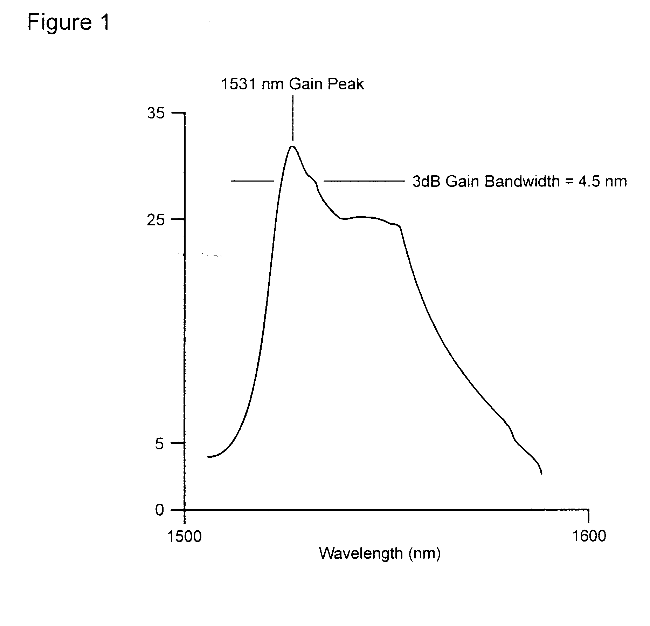

Notwithstanding these generally excellent characteristics, a disadvantage associated with EDFAs is their narrow spectral width and uneven gain band. The useful telecommunications window of a C-band EDFA is approximately 20-30 nm wide, while an ideal amplifier would have a flat spectral gain across the full spectrum, which extends from approximately 1520 nm to 1570 nm. The peak wavelength of the erbium gain spectrum varies from about 1530 nm to about 1535 nm depending upon the host glass material. Fig. 1 shows the characteristic gain spectrum of a particular conventional EDFA where it can be seen that the gain as a function of wavelength varies coniderably; this variation will be referred to hereinafter as gain ripple. Numerous techniques have been published for widening and flattening the gain spectrum (i.e. reducing the ripple) and include for example co-doping an erbium-doped silica glass fibre with Al₂O₃; changing the host glass material itself; using various forms of attenuating filters to reduce the gain at the emission peak; and, constructing hybrid devices having two or more different types of serially connected erbium doped fibre and actively adjusting pump conditions independently in each fibre section to compensate for the different gain slopes of each fibre.

U.S. Patent No. 5,900,969 entitled Broadband flat gain optical amplifier in the name of Srivastava, et al. issued May 4, 1999 incorporated here by reference, describes a flat gain spectra in an optical amplifier by first amplifying a received optical signal and then adjusting the level of the amplified input signal to a predetermined level and then amplifying the adjusted signal, in which the wavelength dependence of the optical amplifier is substantially reduced to achieve the desired gain spectra.

In addition to the aforementioned problems and solutions associated with minimizing gain ripple, and uneven gain over a desired operational band of wavelengths another significant problem exists to which there have been no simple, inexpensive and practicable solutions. This other significant problem solved by this invention relates to improving dynamic gain tilt. The term dynamic gain tilt as used hereafter means the variation in gain at one wavelength as a result of changing the gain at any other wavelength via a change in input EDFA operating conditions. Although the techniques described above for minimizing gain ripple can provide a relatively flat spectrum in a specified wavelength band for a specific set of input optical powers and wavelength, the gain equalization performance degrades rapidly when the gain is changed (change in average population inversion levels) from the nominal conditions by changing the input power to the amplifier. One reported solution to this problem is allegedly achieved by a hybrid fibre device having cascaded amplifying stages with different gain spectra and an equal number of pump sources to allow the gain spectra of the individual stages to be effectively tuned independently so that when the total gain is changed, the relative contribution of each stage can be adjusted to arrive at the desired gain, with a resulting gain spectrum having a minimal amount of spectral distortion over the selected wavelength band. As an example, an erbium doped fibre having a positive gain slope may be combined with a different erbium doped fibre having a negative gain slope such that the hybrid device has a nearly flat gain at specific input power conditions. However, if the overall gain of the hybrid device must be changed, the gain slope of each of the constituent states will generally change at different rates when the pump power input to one of the stages is changed. In order to achieve good compensation at the new operating point, the relative gain of each of the constituent gain stages must be readjusted to make the gain slopes compensate each other. In implementing this type of amplifier, one skilled in the art would likely cascade two or more different erbium doped fibre compositions and provide a separate pump source for each amplifying stage at an end of each stage so as to minimize the number of splices and make it as convenient as possible to independently control the pump power to each stage. However, this technique for reducing or improving dynamic gain tilt requires a complex control scheme during operation in which the total power of multiple pump sources must be coordinated in order to realize gain slope compensation over a range of different gains (i.e. to change input power while maintaining a fixed target output power).

United States Patent number 5,764,406 in the name of Newhouse et al. entitled Hybrid Optical Amplifier Dynamic Gain Tilt incorporated herein by reference, describes a system wherein an erbium doped fibre amplifier device has a dynamic gain tilt that is less then the gain tilt of any of the constituent fibres. The hybrid device has at most one less pumping source than the number of constituent waveguides of the device. The hybrid device automatically provides a change in the pump distribution among the constituent doped waveguide sections so as to achieve a readjustment of the relative gains of the constituent sections. In one embodiment, this invention provides constituent EDFs of different co-dopant compositions that provides an automatic change in the pump distribution or partitioning among the constituent EDF sections so as to achieve a readjustment of the relative gains of the constituent EDF sections.

Although the '406 patent appears to achieve its intended function, it is a relatively costly and is a complicated solution to dynamically controlling gain tilt.

Most known solutions for correcting for dynamic gain tilt have an associated power loss (approximately 5dB).

It is an object of this invention to provide a novel optical amplifying system does not attenuate a pre-amplified signal by disposing a "chopping/attenuating" filter in-line.

It is another object of the invention to provide an optical amplifier that provides tilt control by adding an intermediate amplifying stage having an amplification spectral response that can be used in combination with an EDFA for controlling or offsetting unwanted tilt.

### Summary of the Invention

In accordance with the invention, there is provided, an optical amplifier comprising:
a first-stage for receiving an optical signal to be amplified and having a length of erbium doped fibre and a pump for providing energy to the erbium doped fibre, the first-stage for pre-amplifying the optical signal;
a second-stage optically coupled to receive the optical signal from the first-stage erbium doped fibre after the optical signal has been pre-amplified, the second-stage comprising a Raman amplifier having a length of optical fibre and a Raman pump for providing energy to the length of optical fibre for further amplifying the pre-amplified signal propagating therethrough and for controlling tilt of the amplified signal; and, a third stage EDFA for further amplifying the signal amplified by the Raman amplifier.

In accordance with this invention, there is provided, an optical amplifier having two erbium-doped amplifiers having a Raman amplifier disposed therebetween for gain tilt control of one or more of the two erbium-doped amplifiers, the Raman amplifier having means for adjusting one of the output intensity of the Raman amplifier and a centre wavelength of the Raman amplifier.

In accordance with the invention, an optical amplifier is provided, having two erbium-doped amplifiers having a Raman amplifier disposed therebetween for extending the wavelength of amplification of one or more of the two erbium-doped amplifiers.

In accordance with the invention, a multi-stage optical amplifier is provided, comprising:
an EDFA stage having a length of erbium-doped optical fibre and a laser source for providing an pump signal S_{PE} to the length of erbium-doped optical fibre; and,
a Raman stage, optically coupled the EDFA stage, the Raman stage having a length of optical fibre and a laser source for providing a pump signal S_{PR} for providing Raman amplification of light passing through the length of optical fibre; and,
means for controllably varying at least one of wavelength and intensity of the pump signal S_{PR}.

### Brief Description of the Drawings

Exemplary embodiments of the invention will now be described in conjunction with the drawings, in which:
Fig. 1 is a graph of gain (dB) versus wavelength (nm) for a typical erbium doped amplifier;
Fig. 2 is a block diagram of a prior art conventional two stage EDFA system having a first-stage pre-amplifier optically coupled with a second-stage EDFA;
Fig. 3 is a block diagram of a two-stage amplifying system having an EDFA followed by a Raman amplifier having a length of DCF;
Fig. 4 is a block diagram of a prior art two stage EDF amplifier having a gain tilt filter disposed between first and second EDF stages;
Fig. 5 is block diagram of a preferred embodiment of the invention wherein a Raman amplifying stage having a length of DCF is sandwiched between two EDFAs;
Fig 6a is a plot of the spectrum of a Raman amplifier depicting amplification versus wavelength for a pump signal having a wavelength of 1465 nm;
Fig. 6b shows three graphs of Raman gain versus wavelength at different pump powers;
Figs. 7a is a graph of gain versus wavelength for an EDFA over the wavelength range 1530-1565 nm.
Fig. 7b is a graph of Raman pump power versus wavelength for a given input Raman pump power;
Fig. 7c is a graph showing the amplified output spectrum after combining the two stages having outputs shown in Fig. 7a and 7b;
Figs 8a through 8c depict graphs similar to those shown in Figs 7a through 7c respectively, however the output response shown in Fig. 8a depicts erbium amplification with negative tilt;
Fig. 9a is a graph depicting gain versus wavelength a first-stage EDFA for two levels of power;
Fig. 9b is a graph of a second-stage Raman amplifier of Gain versus wavelength for three levels of pump power; and,
Fig. 9c illustrates gain versus wavelength for a third stage EDFA disposed after the second Raman stage shown in Fig. 9b.

### Detailed Description

Referring again to Fig. 1 the gain spectrum of a typical EDFA amplifier is shown wherein it can be seen that the gain as a function of wavelength varies.

For a wide variety of glass hosts, rare earth doped optical amplifiers and particularly EDFAs are effectively homogeneously broadened, and the overlap of dopant ions with the signal modes is nearly wavelength independent. As such, the gain spectrum, here being the small signal gain that would be measured by a weak probe signal while the operating point of the amplifier is fixed, is constrained to a single parameter family of wavelength dependencies. Therefore if gain of the amplifier at some reference wavelength is changed due to a change in input (i.e., pump and/or signal power) the amplifier gain at other wavelengths will change by well defined amounts that likely are to be different from the amount of gain change at the reference wavelength. The wavelength dependence of the amplifier gain change as of result of an input change is referred to herein as dynamic gain tilt. Hence, the dynamic gain tilt is a distortion of the amplifier gain spectrum for operating conditions that differ from the operating point for which the amplifier was designed.

As it was pointed out in the background of this invention, filters have been provided heretofore for offsetting and flattening the gain spectrum of conventional EDFAs. However providing such a fixed filter does not provide a solution to controlling distortion due to dynamic gain tilt a condition that varies with input power of the input optical signal. Furthermore, fixed and dynamic filters attenuate light passing therethrough, which is counter to the purpose of the EDFA whose purpose is to amplify optical signals.

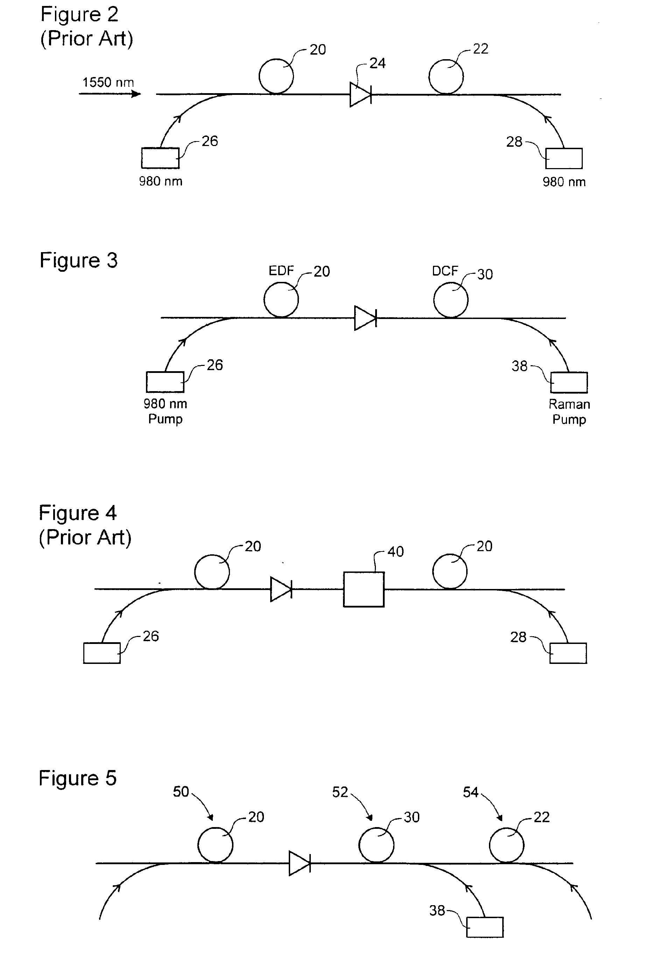

Turning now to Fig. 2, a two stage EDFA system is shown, wherein a first-stage amplifier has a length of erbium-doped optical fibre 20 having a 980 nm pump 26 coupled to provide optical energy to the fibre 20. An input end of the fibre 20 has a port for receiving a signal to be amplified. A second-stage of the amplifier has a length of erbium-doped fibre 22. An optical isolator is disposed between the two lengths of fibre 20 and 22 to prevent light from propagating in a backwards direction from 22 to 20. A second 980 nm pump 28 provides energy to the EDF 22. In operation, pre-amplification of a signal having a central wavelength of 1550 nm occurs in the first amplifying fibre 20 in the presence of a pump signal. Subsequently further amplification occurs when the pre-amplified signal passes through the second-stage of the amplifier.

Optical transmission systems using conventional single-mode transmission fibre suffer from unwanted chromatic dispersion which is deleterious to signal transmission in highspeed wavelength division multiplexed (WDM) optical systems. For example, in systems with single mode fibre, it is necessary to compensate for large positive dispersion of the single-mode transmission optical fibre. This is done by incorporating lengths of dispersion compensating fibre (DCF) at various locations through a transmission system. Due to non-linear effects, it is best not to provide all of the dispersion compensation fibre at the end of a transmission system. For example, some DCF may be placed at, within or near an amplifier or repeater. Some prior art amplifiers incorporate a length of DCF in between amplifying stages of an amplifier. One side effect of this, is approximately 10 dB of loss, and significant degradation in the noise figure.

Hansen, et al. in a publication in Electron. Lett., 34, 1136, 1998 used Raman gain in a DCF to eliminate an erbium amplifier and the requirement of such. In this instance, Hansen et al. used a single wavelength for both signal and pump. DCF is a good choice for Raman amplification as it has a small non-linear effective area

Turning now to Fig. 3, a two-stage amplifier is shown wherein a first-stage includes a section of EDF 20 having a 980 nm pump coupled thereto, and an isolated second-stage having a length of un-doped DCF 30 having a high-powered Raman pump 38 coupled thereto. The second-stage Raman amplifying section conveniently functions as a dispersion compensator and overcomes the loss that would otherwise be incurred by correcting for chromatic dispersion by passing the signal through the DCF.

A typical arrangement of a multi-stage optical amplifier is shown in Fig. 4. Here a gain-tilt filter 40 is provided between the amplifying stages of two EDFAs. Feedback circuitry is not shown in this figure. The filter 40 can be dynamically controlled. A dynamically tunable filter arrangement is shown in U.S. Patent No. 5,900,969 incorporated herein by reference.

Fig. 5 illustrates an embodiment of this invention wherein a Raman amplifying stage is disposed between two EDFAs to achieve an advantage not provided for in any of the aforementioned embodiments.

In Fig. 5 a three-stage amplifier is shown having a second-stage Raman amplifier 52 disposed between first and third-stage EDFAs 50 and 54. The advantage of providing the Raman amplifier after the pre-amplifying stage, rather than after the second EDFA 54 is that less power is required from the Raman amplifier to provide compensation for the pre-amplified signal after EDFA 50 rather than providing compensation for the fully amplified signal after the EDFA 54. The Raman amplifier 52 is shown to have a length of dispersion compensating fibre and a Raman pump. However, although this preferred embodiment is shown having a length of DCF 30, the DCF is not required; in its place a length of standard single-mode fibre can be provided.

There are three advantages in utilizing the Raman gain three-stage amplifier shown in Fig. 5. The Raman gain reduces the effective loss of the DCF. It provides additional gain at specific wavelengths; and, a most significant advantage is that it provides a way in which to implement dynamic gain flattening or tilt control without using attenuating filters.

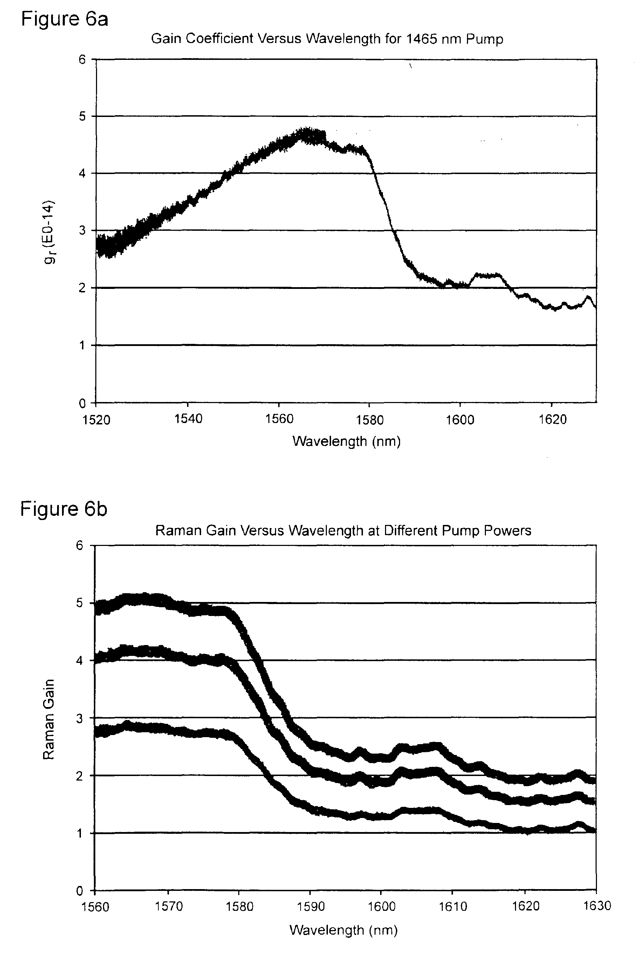

By way of example, an EDFA that operates to wavelengths of 1565 nm has an output (amplification) spectrum having a sharp roll-off beyond wavelengths of 1560 nm. In order to obtain amplification for an extended wavelength range, an additional erbium fibre and pump power is required. Thus, in the exemplary embodiment shown in Fig. 5, the pump wavelength of the Raman pump 38 of the Raman amplifying stage is selected such that maximum Raman gain is at 1565. For shorter signal wavelengths the gain is lower. Thus, the Raman stage can extend the bandwidth that can be amplified. In a preferred embodiment the Raman amplifier includes two pump lasers, one having an output signal having a wavelength of 1455 nm and another having an output signal with an output wavelength of 1480 nm. In this preferred embodiment the lasers are switchable, such that on or the other can be switched into the circuit, depending upon the amount and type of compensation required. Fig. 6a shows a typical Raman amplification spectrum having a positive and negative sloped region on either side of a peak; by ensuring that the peak is at a preferred wavelength, either the negative or positive sloped region of the Raman amplifier can be used. For example the peak can be shifted by switching between the two Raman pump lasers having different centre wavelengths. Another variable that provides a means of varying the magnitude of amplification of a particular region of the Raman amplification spectrum is variation of the intensity of the pump signal. Thus by controlling both the wavelength and magnitude of the Raman pump, substantial control can be afforded of the output spectrum of the entire multi-stage amplifier.

Therefore, in one embodiment, the Raman stage can be used for the multi- purpose of overcoming loss associated with the DCF and can be used to extend the range of wavelengths of signal amplification, and can be used to compensate for unwanted tilt of the erbium amplifying stage. In order to achieve this a Raman pump having suitable power and a suitable centre wavelength must be selected.

In operation the amount of pump power is varied in accordance with the amount of amplification that is required. Increasing the pump power increases the gain and provides more positive tilt. Increasing the amount of Raman gain will improve the noise figure since losses are reduced. This is a significant improvement over the use of attenuating filters that increase mid-stage loss and thus the noise figure.

The spectrum of a Raman amplifier shown in Fig. 6a is essentially a peak which falls/ slopes with a positive and a negative slope on either side thereof. This feature can be used dynamically to equalize or lessen the tilt normally exhibited by an EDFA.

Fig. 6b shows Raman gain versus wavelength for different pump powers. The curves have substantially a same profile, however the amplitude varies proportionately with pump power.

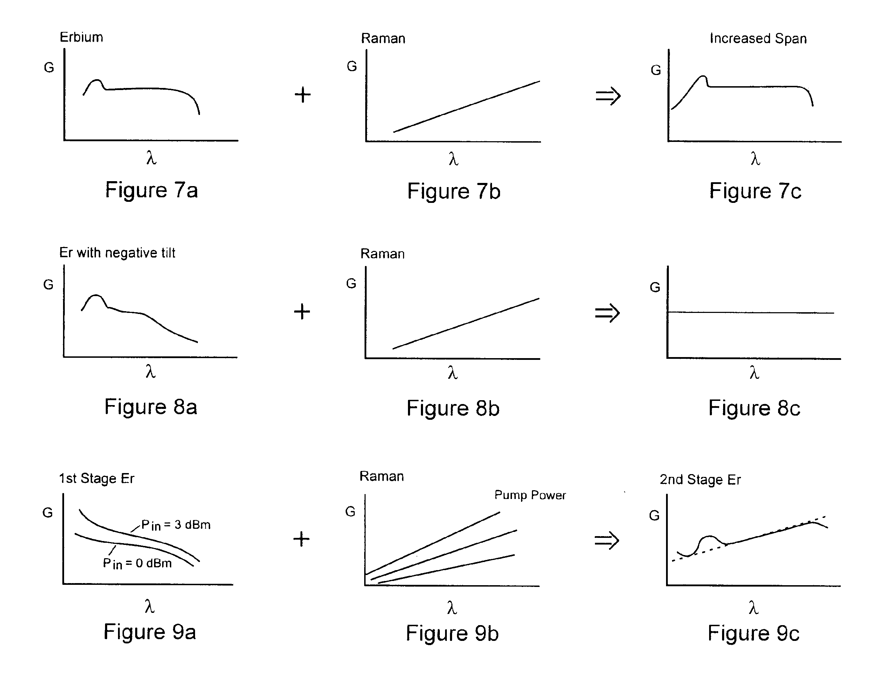

Referring now to Figs 7a through 9c and more particularly Fig. 7a, a spectrum is shown of an output signal of an EDFA. In this instance this EDFA serves as a pre-amplifying stage and is combined with a Raman amplification stage having the output spectrum shown in Fig. 7b; the output spectrum of Fig. 7c results, which illustrates an increased amplification spectrum wherein some higher wavelengths poorly amplified after the first-stage are amplified after both stages of amplification.

Aside from increasing the amplification spectrum using a Raman amplification stage after an EDFA pre-amplifying stage, other useful results can be achieved. For example, Figs. 8a through 8c illustrate correcting or lessening tilt that is present in the EDFA spectrum shown in Fig. 8a. By using a portion of the Raman spectrum having a positive tilt substantially opposite to the negative tilt shown in Fig. 8a, over a same range of wavelengths, a substantially flat output spectrum as shown in Fig. 8c can be achieved.

By varying the input power to the Raman pump, different output spectra result. This is illustrated in Fig. 9c wherein three spectra are shown for three different Raman pump intensities. As well, varying the wavelength of the Raman pump signal can shift the Raman output spectrum.

Figs. 9a through 9c show three output spectra. In Fig. 9a two output curves are shown for 0 dBm and 3 dBm respectively for a first stage EDFA not in saturation wherein a negative tilt can be seen. Either of these two outputs can be combined with one of the Raman outputs shown in Fig. 9b to maintain the output spectrum as shown in Fig. 9c after a second-stage EDFA is provided subsequent to the Raman amplification stage. The second-stage EDFA is in saturation and has the 1332 nm peak slightly suppressed.

By varying the pump power of the Raman amplifier the overall flatness of the amplifier can be controlled.

Of course, numerous other embodiments may be envisaged, without departing from the sprit and scope of the invention. For example, in the embodiments shown heretofore, the filter is shown and described to be movable, however, an embodiment wherein the beam is shifted can be realized.

## Claims

1. An optical amplifier comprising:
a first-stage for receiving an optical signal to be amplified and having a length of erbium doped fibre and a pump for providing energy to the erbium doped fibre, the first-stage for pre-amplifying the optical signal;
a second-stage optically coupled to receive the optical signal from the first-stage erbium doped fibre after the optical signal has been pre-amplified, the second-stage comprising a Raman amplifier having a length of optical fibre and a Raman pump for providing energy to the length of optical fibre for further amplifying the pre-amplified signal propagating therethrough and for controlling tilt of the amplified signal; and, a third stage EDFA for further amplifying the signal amplified by the Raman amplifier.

2. An optical amplifier as defined in claim 1, wherein the Raman pump is for providing a Raman pump signal, said second-stage further comprising means for varying at least one of intensity and wavelength of the Raman pump signal.

3. An optical amplifier as defined in claim 1, wherein the length of optical fibre within the Raman amplifier is at least in part dispersion compensating fibre.

4. An optical amplifier having two erbium-doped amplifiers having a Raman amplifier disposed therebetween for gain tilt control of one or more of the two erbium-doped amplifiers, the Raman amplifier having means for adjusting one of the output intensity of the Raman amplifier and a centre wavelength of the Raman amplifier.

5. An optical amplifier as defined in claim 4, further comprising means for shifting wavelength response of the Raman amplifier to provide gain tilt control.

6. An optical amplifier as defined in claim 4 wherein the Raman amplifier includes a pump signal and further comprising means for varying intensity of the Raman pump signal.

7. An optical amplifier as defined in claim 4 wherein the Raman amplifier includes a section of dispersion compensating fibre.

8. An optical amplifier as defined in claim 4, wherein the two erbium doped amplifiers each have a pump for providing a pump signal of a predetermined wavelength λ_{EDF} for providing energy thereto.

9. An optical amplifier as defined in claim 8 wherein the wavelength λ_{Raman} is selected to extend the wavelength of amplification of the erbium doped fibre amplifiers.

10. An optical amplifier as defined in claim 4, wherein the Raman amplifier has amplitude response that has an opposite and counter slope as a function of wavelength to that of the erbium doped amplifiers' gain tilt within the operation band of wavelengths.

11. An optical amplifier having two erbium-doped amplifiers having a Raman amplifier disposed therebetween for extending the wavelength of amplification of one or more of the two erbium-doped amplifiers.

12. An optical amplifier as defined in claim 11, wherein the two erbium doped amplifiers each have a pump for providing a pump signal of a predetermined wavelength λ_{EDF} for providing energy thereto, and wherein the Raman amplifier has a pump having a wavelength of λ_{Raman}, wherein λ_{EDF} <λ_{Raman}.

13. An optical amplifier as defined in claim 8 wherein the wavelength λ_{Raman} is selected to extend the wavelength of amplification of the erbium doped fibre amplifiers

14. A multi-stage optical amplifier comprising:
an EDFA stage having a length of erbium-doped optical fibre and a laser source for providing an pump signal SPE to the length of erbium-doped optical fibre; and,
a Raman stage, optically coupled the EDFA stage, the Raman stage having a length of optical fibre and a laser source for providing a pump signal S_{PR} for providing Raman amplification of light passing through the length of optical fibre; and,
means for controllably varying at least one of wavelength and intensity of the pump signal S_{PR}.
